# EUROPEAN PATENT SPECIFICATION

(11) **EP 2 164 143 B1**
(45) Date of publication and mention of the grant of the patent: **21.06.2017**
(21) Application number: 09169598.1
(22) Date of filing: 07.09.2009
(51) Int. Cl.: H02G 3/18, H02G 3/08

(54) **Floor box**
Bodenkasten
Boîte de parquet

(30) Priority: 11.09.2008 SE 0801948
(43) Date of publication of application: 17.03.2010
(73) Proprietor: Schneider Electric Industries S.A.S., 92500 Rueil-Malmaison (FR)
(72) Inventor: Paulcén, Torbjörn, 611 50, Nyköping (SE)
(74) Representative: Groth & Co. KB

(56) References cited:
- US-A- 3 794 956
- US-A1- 2006 065 420

## Description

### Technical Field

The present invention relates to the area of floor boxes and furniture boxes for electric, telephone and computer socket connections.

### Background of the Invention

In public environments, there is a need of temporary connecting products such as, e.g., vacuum cleaners, computers and telephones. This may, e.g., be carried out by mounting a floor box in an existing floor and to this floor box connect the electric products. These floor boxes are provided with a lid that is sealed against the floor box. However, there are still problems with these existing floor boxes, above all in respect of sealing, accessibility and strength.

US patent 7,078,616 shows a floor box that is covered by a lid as well as sealed using an O-ring seal. By the design of the lid and the seal, it is required that the connection of the lid is made rectilinearly in the axial direction to get the seal to act in the intended way. In this construction, ever so little attention has been paid to protect the O-ring against damage, the floor box is in addition extremely small, 51 mm in diameter and is only intended for American small straight plugs. To be able to connect European plugs, both straight and angled, a size is required that is at least the double. The risks of damaging the O-ring when the lid is closed or the lid getting caught at a small tilting increase with the size of the diameter of the floor box.

US patent 7,193,160 shows a floor box covered by a lid that can be turned so that a lead-through hole will open or close. The product is not intended for swabbed floors and has therefore no protection against water penetration.

US patent 6,450,353 shows a floor box that comprises a cover lid that is sealed by means of an axially acting seal where the lid is attached with screws to provide a sealing force. This design gives an inferior accessibility to the socket.

However, all these known devices allow that electric cables can be connected through a floor.

US patent application 2006/0065420 also discloses a small round floor box in which power receptacles or data connectors are mounted.

### The Object of the Invention

The present invention aims at providing a user-friendly, robust floor box/furniture box for electric, telephone and computer socket connections, having very good and reliable sealing properties. This is provided above all by a simple and robust construction having an easily openable lid, which in combination with an abutting component provides a sealing having very good and reliable sealing properties, with the purpose of eliminating that damp and moisture penetrate during washing of the floor.

### Summary of the Invention

By the present invention such as the same is defined in the independent claims, the above-mentioned object is met. Suitable embodiments of the invention are defined in the dependent claims.

The invention relates to a floor box/furniture box comprising an electric insert to which electric products can be connected. The insert is placed in a connection cavity in the floor box. Fastening devices are arranged to fit the floor box in a floor or in a piece of furniture. The floor box is arranged with a radially directed circular abutment flange as well as a circularly shaped lid placed above a circular opening in the floor box to cover the socket cavity. The abutment flange transforms into the circular opening that is formed with a cylindrical wall integrally with the abutment flange. The cylindrical wall transforms into an integral, radially orientated bottom surface against which bottom surface the lid abuts. An O-ring seal is placed in a seal groove in and around the periphery of the lid so that the seal abuts against the cylindrical wall when the lid is closed.

In the invention, the transition between the abutment flange and the circular opening in the floor box is formed with a conical ring-shaped compression surface.

In the invention, the lid is formed with a conical ring-shaped edge surface to facilitate a fitting in of the lid into the circular opening.

In an additional embodiment, the lid is provided with an actuator to be able to remove the lid from the floor box. The actuator is preferably formed as a foldable handle, which in lowered position is placed in a first depression in the lid. In this embodiment, the lid may be provided with a second depression in direct connection with said first depression in order to manually grip, angle up and lift off the lid with the handle.

Also other embodiments of actuators are feasible within the scope of the invention, e.g., grooves or recesses in the lid/box to connect a screwdriver or the like so that the lid can be lifted up.

In one embodiment, the fastening devices are formed as resilient tongues that are placed on the periphery of the floor box. Alternatively, the fastening device may consist of an expanding shoulder or swivel that is manoeuvred by means of a screw.

The design of the lid and the inner part of the floor box according to the invention co-operating with the lid means that the lid can be connected to the floor box by an angular motion as well as a rectilinear motion or a combination of said motions without getting caught or damaging the O-ring.

The reliability of the sealing also consists to a certain extent of the lack of dependence of sensitive parts such as locking mechanism and hinge, which always are potential sources of error.

### Brief Description of the Drawings

The invention will now be described in more detail by means of embodiment examples, reference being made to the accompanying drawings, wherein
- Figure 1: shows a perspective view of a floor box according to the present invention,
- Figure 2: shows a side view of the floor box according to Figure 1,
- Figure 3: shows a top view of the floor box according to Figure 1,
- Figure 4: shows a section according to the marking ABC-ABC in Figure 3
- Figure 5: shows an enlargement of an encircled part according to Figure 4.

### Description of the Invention

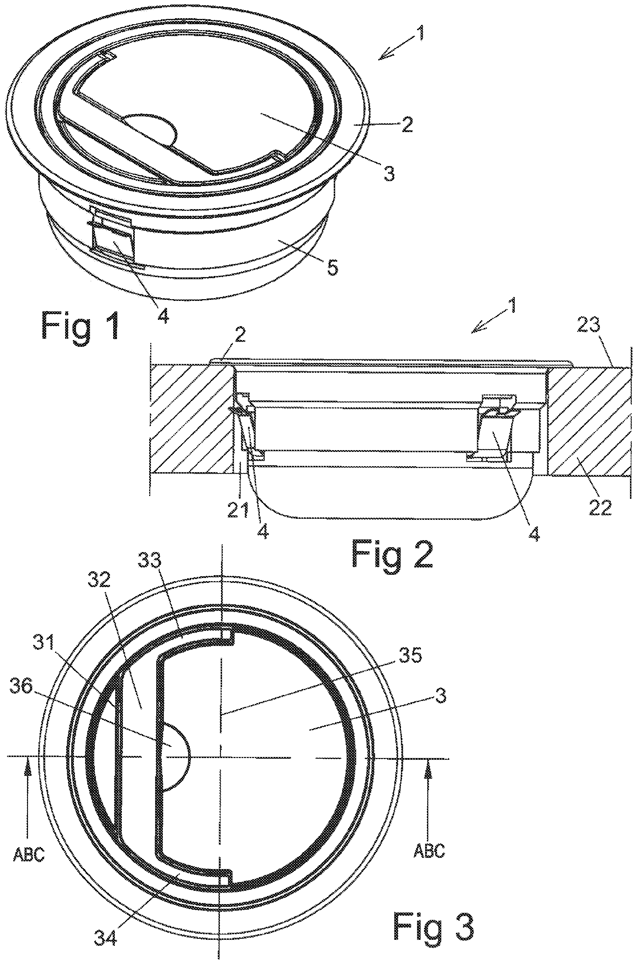

Figure 1 shows a floor box 1 that is provided with an abutment flange 2 and a lid 3. The floor box is provided with fastening devices formed as resilient tongues 4 that are placed on and around the periphery 5 of the floor box.

Figure 2 shows the floor box 1 pressed down into a circular hole 21 in a floor 22, the tongues 4 acting as barbs and holding the floor box 1 in the floor 22 so that the abutment flange 2 abuts closely against the floor surface 23.

As is shown in Figure 3, the lid is provided with a first depression 31 into which a handle 32 as actuator is folded-down. The handle is formed as a yoke having two legs 33, 34 each one of which is articulated around a shaft 35 lowered in the lid. For gripping the handle 32 and folding it around the shaft 35, the lid is provided with a second depression 36, which directly connects with the first depression 31. When the handle is raised, the lid can be pulled out of the floor box.

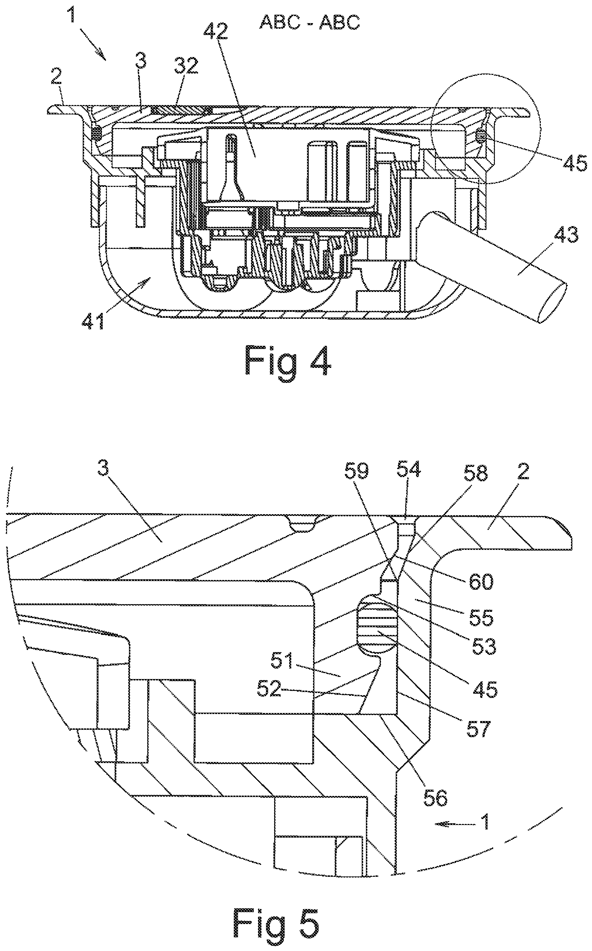

Figure 4 shows a section ABC-ABC through the floor box along the line in Figure 3. The floor box 1 is provided with an electric insert 42 placed in a connection cavity 41 in the floor box 1. The insert is mounted in the connection cavity by being attached by snap action to the same, the insert being connected electrically via electric cables 43 that are strain relieved in the floor box. The figure also shows the lid 3 with the handle 32 thereof in a folded-down position, which forms an even upper surface on a level with the abutment flange 2 on the floor box 1. The figure also shows that an O-ring seal 45 is placed around the lid.

Figure 5 shows an enlargement of the encircled part in Figure 4 with the abutment flange 2 of the floor box 1 and the lid 3. The lid is provided with an axially directed ring-shaped collar 51, which is terminated by a ring-shaped conical edge surface 52. The ring-shaped collar 51 is provided with a seal groove 53 arranged externally around the collar in which the O-ring sea! 45 is mounted. The abutment flange 2 transforms into a circular opening 54 in the floor box, which opening is formed with a circularly cylindrical wall 55 integrally with the abutment flange 2, which wall 55 furthermore transforms into a radially orientated bottom surface 56 integrally with the flange 2 and the cylindrical wall 55. In this connection, the collar 51 of the lid abuts evenly against the bottom surface 56. When the lid is applied, the O-ring seal 45 in the seal groove 53 around the periphery of the lid will abut against an inner surface 57 of the cylindrical wall when the lid is applied and, in doing so, seal the floor box 1 so that damp and moisture are prevented from penetrating during washing of the floor 22. Between the abutment flange 2 and the cylindrical wall 55, a conical compression surface 58 is arranged, which compression surface is arranged to compress the O-ring seal 45 when the lid 3 is pressed on. In doing so, the lid with the seal snaps over an edge 59 that is formed between the compression surface 58 and the inner surface 57. Also the lid 3 is formed with a conical edge surface 60 corresponding to the compression surface 58 to minimize the gap between the floor box and the lid.

In order to provide a reliable and robust sealing, the contacting surfaces of the O-ring in the floor box are accordingly divided into three different steps. First, a cylindrical part having an entering radius, from the cylindrical opening 54 and downward, which has the purpose of guiding in the O-ring into the correct position and keeping it in place and preventing it from becoming deformed and damaged in the next step. The next step is a compression phase, which is terminated with an end radius. The last phase is the cylindrical sealing part in which the O-ring seals when the lid 3 is closed, i.e., in the position of the O-ring shown in Figure 5.

One design of the floor box with the lid thereof according to Figure 5 entails that the lid can be connected to the floor box by an angular motion as well as a rectilinear motion or a combination of said motions with a very good sealing without getting caught or damaging the seal. Thus, a floor box according to the invention obtains a good manageability as regards opening and closing of the lid in combination with a high degree of sealing.

## Claims

1. Floor box (1) comprising an electric insert (42) placed in a connection cavity (41) in the floor box (1), fastening devices (4) to fasten the floor box (1) in a floor (22), the floor box being provided with a radially directed circular abutment flange (2) arranged to abut against the floor (22) as well as a circularly shaped lid (3) placed above a circular opening (54) in the floor box (1) to cover the connection cavity (41) of the floor box (1), the abutment flange (2) transforming into the circular opening (54) that is formed with a cylindrical wall (55) having an inner surface (57) integrally with the abutment flange (2), **characterized in that** the cylindrical wall (55) transforms into a radially orientated bottom surface (56) integrally with the wall (55) against which bottom surface (56) the lid abuts as well as that the transition between the abutment flange (2) and the circular opening (54) in the floor box (1) is formed with a conical ring-shaped compression surface (58), an O-ring seal (45) being placed in a seal groove (53) in and around the periphery of the lid (3) so that the seal (45) abuts against the cylindrical wall (55) when the lid (3) is applied and that the lid (3) is formed with a conical ring-shaped edge surface (52) together with a conical edge surface (60) corresponding to the compression surface (58) to minimize the gap between the floor box and the lid and to facilitate a fitting in into the circular opening (54).

2. Floor box according to claim 1, **characterized in that**, between the abutment flange (2) and the inner surface (57), a conical compression surface (58) is arranged for the formation of an edge (59) between the compression surface (58) and the inner surface (57).

3. Floor box according to any one of claims 1-2, **characterized in that** the lid (3) is provided with an actuator (32) to be able to remove the lid (3) from the floor box (1).

4. Floor box according to claim 3, **characterized in that** the actuator is formed as a foldable handle (32), which in lowered position is placed in a first depression (31) in the lid (3).

5. Floor box according to claim 4, **characterized in that** the lid (3) is provided with a second depression (36) in direct connection with said first depression (31), in order to manually grip, angle up and lift off the lid (3) with the handle (32).

6. Floor box according to any one of claims 1-5, **characterized in that** the fastening devices are formed as resilient tongues (4), which are placed on the periphery of the floor box (1).

## Patentansprüche

1. Bodenkasten (1), umfassend einen elektrischen Einsatz (42), der in einem Verbindungshohlraum (41) im Bodenkasten (1) platziert ist, Befestigungsvorrichtungen (4) zur Befestigung des Bodenkastens (1) in einem Boden (22), wobei der Bodenkasten mit einem radial ausgerichteten kreisförmigen Anlageflansch (2), der zur Anlage an den Boden (22) angeordnet ist, sowie einem kreisförmigen Deckel (3), der über einer kreisförmigen Öffnung (54) im Bodenkasten (1) platziert ist, um den Verbindungshohlraum (41) des Bodenkastens (1) zu bedecken, versehen ist, wobei der Anlageflansch (2) in die kreisförmige Öffnung (54) übergeht, die mit einer zylindrischen Wand (55) ausgebildet ist, welche eine mit dem Anlageflansch (2) integrale Innenfläche (57) aufweist, **dadurch gekennzeichnet, dass** die zylindrische Wand (55) in eine mit der Wand (55) integrale, radial ausgerichtete Bodenfläche (56) übergeht, wobei der Deckel an der Bodenfläche (56) anliegt, und der Übergang zwischen dem Anlageflansch (2) und der kreisförmigen Öffnung (54) im Bodenkasten (1) mit einer konischen ringförmigen Kompressionsfläche (58) ausgebildet ist, wobei eine O-Ringdichtung (45) in einer Dichtungsnut (53) in dem Deckel (3) und um seinen Umfang platziert ist, so dass die Dichtung (45) an der zylindrischen Wand (55) anliegt, wenn der Deckel (3) anliegt, und dass der Deckel (3) mit einer konischen ringförmigen Randfläche (52) zusammen mit einer konischen Randfläche (60) ausgebildet ist, die der Kompressionsfläche (58) entspricht, um den Spalt zwischen dem Bodenkasten und dem Deckel zu minimieren und so ein Einpassen in die kreisförmige Öffnung (54) zu erleichtern.

2. Bodenkasten nach Anspruch 1, **dadurch gekennzeichnet, dass** zwischen dem Anlageflansch (2) und der Innenfläche (57) eine konische Kompressionsfläche (58) zur Bildung eines Rands (59) zwischen der Kompressionsfläche (58) und der Innenfläche (57) angeordnet ist.

3. Bodenkasten nach einem der Ansprüche 1 - 2, **dadurch gekennzeichnet, dass** der Deckel (3) mit einem Betätigungsglied (32) versehen ist, damit der Deckel (3) von dem Bodenkasten (1) entfernt werden kann.

4. Bodenkasten nach Anspruch 3, **dadurch gekennzeichnet, dass** das Betätigungsglied als ein klappbarer Griff (32) ausgebildet ist, der in der abgesenkten Position in einer ersten Vertiefung (31) des Deckels (3) platziert ist.

5. Bodenkasten nach Anspruch 4, **dadurch gekennzeichnet, dass** der Deckel (3) mit einer zweiten Vertiefung (36), die in direkter Verbindung mit der ersten Vertiefung (31) steht, versehen ist, um den Deckel (3) mit dem Griff (32) manuell zu ergreifen, nach oben zu kippen und abzuheben.

6. Bodenkasten nach einem der Ansprüche 1 - 5, **dadurch gekennzeichnet, dass** die Befestigungsvorrichtungen als elastische Zungen (4) ausgebildet sind, die am Umfang des Bodenkastens (1) platziert sind.

## Revendications

1. Boîte de sol (1) comprenant un accessoire intérieur électrique (42) placé dans une cavité de connexion (41) dans la boîte de sol (1), des dispositifs de fixation (4) permettant de fixer la boîte de sol (1) dans un sol (22), la boîte de sol étant pourvue d'un épaulement circulaire (2) d'orientation radiale conçu pour venir en appui contre le sol (22) ainsi que d'un couvercle (3) de forme circulaire placé au-dessus d'une ouverture circulaire (54) dans la boîte de sol (1) de façon à recouvrir la cavité de connexion (41) de la boîte de sol (1), l'épaulement (2) devenant l'ouverture circulaire (54) qui est formée avec une paroi cylindrique (55) comportant une surface intérieure (57) d'un seul tenant avec l'épaulement (2), **caractérisée en ce que** la paroi cylindrique (55) devient une surface inférieure (56) d'orientation radiale d'un seul tenant avec la paroi (55), le couvercle venant en appui contre ladite paroi inférieure (56), et **en ce que** la transition entre l'épaulement (2) et l'ouverture circulaire (54) dans la boîte de sol (1) est formée avec une surface de compression (58) en forme de bague conique, un joint torique (45) étant placé dans une rainure d'étanchéité (53) dans et autour de la périphérie du couvercle (3) de telle sorte que le joint (45) vienne en appui contre la paroi cylindrique (55) lorsque le couvercle (3) est appliqué et **en ce que** le couvercle (3) est formé avec une surface de bord (52) en forme de bague conique ainsi qu'avec une surface de bord conique (60) correspondant à la surface de compression (58) afin de minimiser l'espace entre la boîte de sol et le couvercle et de faciliter une insertion dans l'ouverture circulaire (54).

2. Boîte de sol selon la revendication 1, **caractérisée en ce que**, entre l'épaulement (2) et la surface intérieure (57), une surface de compression (58) conique est prévue pour la formation d'un bord (59) et la surface de compression (58) et la surface intérieure (57).

3. Boîte de sol selon l'une quelconque des revendications 1 et 2, **caractérisée en ce que** le couvercle (3) est pourvu d'un élément d'actionnement (32) permettant de retirer le couvercle (3) de la boîte de sol (1).

4. Boîte de sol selon la revendication 3, **caractérisée en ce que** l'élément d'actionnement est réalisé sous la forme d'une poignée pliable (32) qui, en position abaissée, est placée dans un premier évidement (31) dans le couvercle (3).

5. Boîte de sol selon la revendication 4, **caractérisée en ce que** le couvercle (3) est pourvu d'un second évidement (36) directement relié audit premier évidement (31), permettant de saisir manuellement, d'incliner et de soulever le couvercle (3) à l'aide de la poignée (32).

6. Boîte de sol selon l'une quelconque des revendications 1 à 5, **caractérisée en ce que** les dispositifs de fixation sont réalisés sous la forme de languettes élastiques (4), qui sont placées sur la périphérie de la boîte de sol (1).
